# EUROPEAN PATENT SPECIFICATION

(11) **EP 1 962 656 B1**
(45) Date of publication and mention of the grant of the patent: **28.07.2010**
(21) Application number: 06818918.2
(22) Date of filing: 28.11.2006
(51) Int. Cl.: A47J 36/00, B65D 81/34

(54) **CONTAINER PROVIDED WITH A MICROWAVE HEATABLE ELEMENT**
BEHÄLTER MIT EINEM VIA MIKROWELLEN ERHITZBAREN ELEMENT
RÉCIPIENT DOTÉ D UN ÉLÉMENT POUVANT ÊTRE CHAUFFÉ AU FOUR À MICRO-ONDES

(30) Priority: 29.11.2005 EP 05077677
(43) Date of publication of application: 03.09.2008
(73) Proprietor: Impress Group B.V., 7418 AH Deventer (NL)
(72) Inventor: JOUILLAT, Jean-François, 49150 Bauge (FR)
(74) Representative: Prins, Hendrik Willem
(86) International application number: PCT/EP2006/011476
(87) International publication number: WO 2007/062834

(56) References cited:
- EP-A- 1 352 848
- US-A- 4 567 877
- US-A- 4 705 927
- US-A- 4 756 311
- US-A- 5 508 498
- US-A- 5 916 470

## Description

The present invention relates to a container which is provided in heat exchange contact with a microwave heatable element, and to such element (US-A-4 705 927; US-A-5 916 470; US-A-4756311).

Microwave ovens are used for heating food materials which are placed in a container within the microwave oven.

For that reasons the heatable food content is placed in a container which is suitable for microwave heating. If the food material is not placed in a microwave container but heated in the microwave oven in its original container than the heating is not optimal. For reasons, that the microwave heating substantially occurs via the opening in the body of the container after removal of its closure. Microwave heating through the body occurs only to a minor extend. Accordingly, the heating of the hydro content of the container after removal of its closure is sub optimal in that the content in the container is not homogeneously heated.

The present invention has for its object to improve the microwave heating of the content of a container. To that extend the present invention provides a container having a body and a closure for an opening in the body, which body comprises a heatable content and provided in heat exchange contact with a microwave heatable element as defined in claim 1. The heating of the heatable content of the container is improved because additional heating of the heatable content occurs indirectly. The microwave heatable element is heated and heat is transferred into the content of the container because the microwave heatable element is in heat exchange content with the body of the container.

In accordance with the present invention, the heatable element comprises microwave heatable material contained in an envelope. Accordingly, various microwave heatable materials may be used such as water absorbing materials, such as absorbents used for diapers, and materials which comprise an amount of water which is in equilibrium with humidity, such as cherry pits.

Moreover the claimed envelope is semi water permeable, such as a laminated envelope. Before microwave heating the heatable element is moistured with water, which is absorbed by the microwave heatable material. During heating in the microwave oven steam may be produced but the steam cannot be admitted out of the envelope because the envelope is made of semi water permeable material.

According to an embodiment of the container according to the present invention, the envelope is adhered to the body by the supplier. Accordingly, the costumer may place such container directly in the microwave oven if the microwave heatable material may be heated by microwave directly, or after moistening the heatable material contained in the envelope. After heating and use of the heated content the container with the adhered envelope is disposed.

According to another preferred embodiment the envelope is detachably connected to the body. In this situation the container is connected in heat exchange contact with the microwave heatable element just before it is placed in the microwave oven for heating. Handling by the customer is improved when the envelope may be detachably connected to the body and has the form of a pad which is complementary to at least part of the outer form of the container. Accordingly, the customer just has to place the container into the pad and place the combination of container and microwave heatable element pad into the microwave oven.

According to another preferred embodiment the heatable element extends over a part of the height of the body. In this situation only a part of the height of the body is heated in the microwave oven. After heating the exposed part of the height of the body is not heated such that it may be handled using kitchen gloves or par fingers. An other aspect of the present invention relates to a microwave heatable element as defined in claim 6 which may be used in combination with a container with which the microwave heatable element is in heat exchange contact such that the content of the container may be heated in a microwave oven.

Mentioned and other features of the container and microwave heatable elements according to the invention will be further illustrated with reference to the annexed embodiments which are illustrated in the annexed drawings. It is to be understood that these embodiments are given for illustrative purposes and are not considered to limit the present invention as defined in the claims to any extend.

In the drawings are:
Figure 1 in cross section a container
   provided with an adhered microwave heatable element;
Figure 2 a side view, partially broken away, of another container provided with a microwave heatable element having a water permeable envelope which does not fall within the scope of the present invention;
Figure 3 in cross section another container according to the invention provided with a detachable element in the form of a pad; and
Figure 4 in cross section an alternative of the embodiment shown in figure 3.

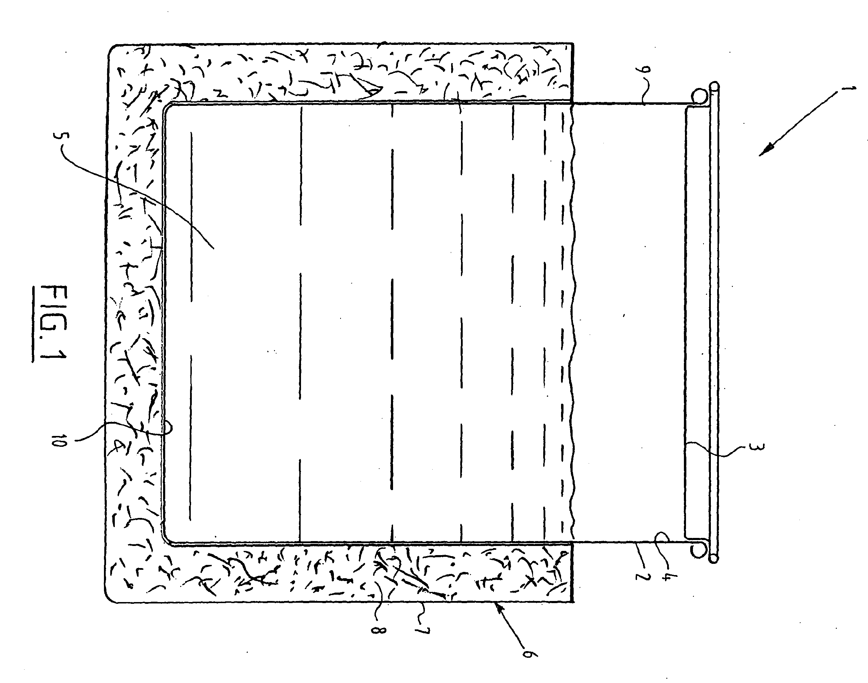

Figure 1 shows in container 1 comprising a body 2 and a closure 3 for a body opening 4. The container 1 comprises a heatable content 5. The body 2 is provided over a part of the height of the body and over its bottom 10 with a microwave heatable element 6 comprising an envelope 7 containing microwave heatable material 8 in the form of an absorbent material provided with water. The envelope 7 is made of water tight plastic, such as polyethylene.

An area 9 of the body 2 is not covered by the microwave heatable element 6.

When a customer is to heat the content 5 of the container 1 and the microwave oven he removes the closure 3 and places the combination of body 2 and adhered microwave heatable element 6 into the microwave oven. Heating occurs via the opening 4 and after heating the material 8 of the element 6 the heat is transferred due to the heat exchange contact between microwave heatable element 6 and the body 2 into the content 5. Accordingly, the content 5 is substantially heated directly via microwaves via the opening 4 and indirectly via the microwave hydro element 6 of a part of the height and via the bottom 10.

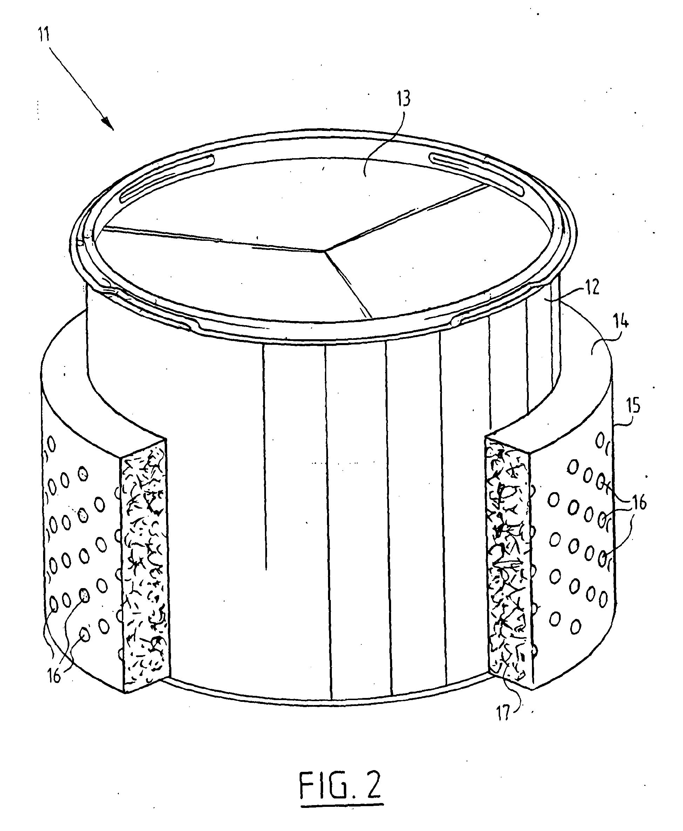

Figure 2 shows another container 11 of the present invention comprising a body 12 and closure 13. The body 12 is over a part of its height provided with a microwave heatable element 14 comprising an envelope 15 which is water permeable (permeability via the openings 16 enlarged for information purposes). The microwave heatable element 14 comprises water absorbent material 17. Prior to heating by the customer the microwave heatable element 14 is moistured with water via the openings 16. Subsequently, the closure 13 is removed in the combination of body 12 and microwave heatable element 14 is placed in the microwave oven. The operation is further similar to that described in relation to the container 1 of figure 1.

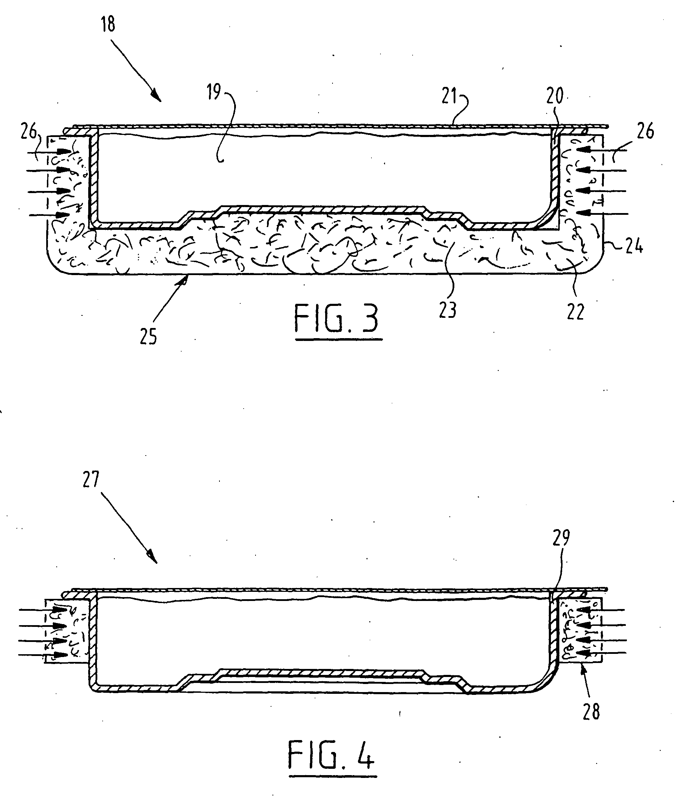

Figure 3 shows a container 18 according to the invention provided with a heatable content 19. The body 20 of the container 18 is closed via a foil 21.

The microwave heatable element 22 has the form a pad. This means that the element 22 comprises absorbent material 23 but the envelope 24 is flexible and preformed and has the form of a pad 25 of cub. Prior to the heating of the content 19 of the container 18 the customer places the container 18 into the pad 25 which makes a heat exchange content with substantially the side walls and the bottom. Due to the flexibility of the envelope 24 and its absorbent material 23. The envelope 24 may be water tight or water permeable. In case of water permeability water is entered via the arrows 26. The combination of container 18 and pad 25 is than placed in the microwave oven for heating. Dependent on the material of the foil 21 the foil is to be removed prior to the microwave heating or may be removed afterwards.

Figure 4 shows another container 27 according to the present invention which is similar to the container 18 of figure 3. In the embodiment of figure 4 the microwave heatable element 28 has the form of an annular sleeve and is clammed circumferentially on the side wall 29 of the container 27. Heating in the microwave oven occurs under similar conditions as have been described in relation to the container 18 as shown in figure 3.

## Claims

1. Container (1, 11, 18, 27) having a body (2, 12, 20) and a closure (3, 13) for an opening in the body (2, 12), which body (2, 12) comprises a heatable content (5, 19) and provided in heat exchange contact with a microwave heatable element (6,14, 22, 28) ,wherein the heatable element (6, 14, 22, 28) comprises microwave heatable material (8, 17, 23) contained in an envelope (7, 15, 24) **characterized in that** the envelope is semi water permeable.

2. Container (1) as claimed in claim 1, wherein the envelope (7) is adhered to the body (2).

3. Container (18) as claimed in claim 1, wherein the envelope (24) is detachably connected to the body.

4. Container (18) as claimed in claim 3, wherein the envelope (22) has the form of a pad (25).

5. Container (11) as claimed in claim 1-4, wherein the heatable element (14) extends over a part of the height of the body (12).

6. Microwave heatable element (6, 14, 22, 28) comprising microwave heatable material (8, 17, 23) contained in an envelope (7, 15, 24) **characterized in that** the envelope is semi water permeable.

## Patentansprüche

1. Behälter (1, 11, 18, 27), der einen Körper (2, 12, 20) und ein Verschlussmittel (3, 13) für eine Öffnung in dem Körper (2, 12) aufweist, wobei der Körper (2, 12) einen erwärmbaren Inhalt (5, 19) umfasst und in wärmetauschendem Kontakt mit einem durch Mikrowellen erwärmbaren Element (6, 14, 22, 28) steht, wobei das erwärmbare Element (6, 14, 22, 28) ein durch Mikrowellen erwärmbares Material (8, 17, 23), das in einer Hülle (7, 15, 24) enthalten ist, umfasst, **dadurch gekennzeichnet, dass** die Hülle für Wasser semi-permeabel ist.

2. Behälter (1) wie in Anspruch 1 beansprucht, wobei die Hülle (7) an dem Körper (2) haftet.

3. Behälter (18) wie in Anspruch 1 beansprucht, wobei die Hülle (24) lösbar mit dem Körper verbunden ist.

4. Behälter (18) wie in Anspruch 3 beansprucht, wobei die Hülle (22) die Form eines Pads (25) aufweist.

5. Behälter (11) wie in Anspruch 1-4 beansprucht, wobei sich das erwärmbare Element (14) über einen Teil der Höhe des Körpers (12) erstreckt.

6. Durch Mikrowellen erwärmbares Element (6, 14, 22, 28), das ein durch Mikrowellen erwärmbares Material (8, 17, 23), das in einer Hülle (7, 15, 24) enthalten ist, umfasst, **dadurch gekennzeichnet, dass** die Hülle für Wasser semi-permeabel ist.

## Revendications

1. Conteneur (1, 11, 18, 27) ayant un corps (2, 12, 20) et une fermeture (3, 13) pour une ouverture dans le corps (2, 12), lequel corps (2, 12) comprend un contenu pouvant être chauffé (5, 19) et prévu en contact d'échange de chaleur avec un élément pouvant être chauffé par micro-ondes (6, 14, 22, 28), dans lequel l'élément pouvant être chauffé (6, 14, 22, 28) comprend un matériau pouvant être chauffé par micro-ondes (8, 17, 23) contenu dans une enveloppe (7, 15, 24) **caractérisé en ce que** l'enveloppe est semi-perméable à l'eau.

2. Conteneur (1) selon la revendication 1, dans lequel l'enveloppe (7) est collée au corps (2).

3. Conteneur (18) selon la revendication 1, dans lequel l'enveloppe (24) est raccordée de manière détachable au corps.

4. Conteneur (18) selon la revendication 3, dans lequel l'enveloppe (22) a la forme d'un coussinet (25).

5. Conteneur (11) selon les revendications 1 à 4, dans lequel l'élément pouvant être chauffé (14) s'étend sur une partie de la hauteur du corps (12).

6. Elément pouvant être chauffé par micro-ondes (6, 14, 22, 28), comprenant un matériau pouvant être chauffé par micro-ondes (8, 17, 23) contenu dans une enveloppe (7, 15, 24) **caractérisé en ce que** l'enveloppe est semi-perméable à l'eau.
